# EUROPEAN PATENT APPLICATION

(11) **EP 2 128 733 A2**
(43) Date of publication of application: **02.12.2009**
(21) Application number: 09161194.7
(22) Date of filing: 27.05.2009
(51) Int. Cl.: G05D 1/02, B60B 19/12

(54) **Autonomous moving body and method for controlling movement thereof**

(30) Priority: 28.05.2008 JP 2008139236
(71) Applicant: Murata Machinery, Ltd., Minami-ku Kyoto-shi Kyoto 601-8326 (JP); Keio University, Tokyo 108-8345 (JP)
(72) Inventor: Takahashi, Masaki, Kanagawa 223-8522 (JP); Suzuki, Takafumi, Kanagawa 223-8522 (JP); Shitamoto, Hideo, Kyoto 612-8686 (JP)
(74) Representative: Franks, Barry Gerard

(57) **Abstract**

An autonomous moving body includes: an omnidirectional moving mechanism for moving the moving body; a detecting unit for detecting an obstacle; and a movement control unit for generating a movement instruction signal for avoiding the obstacle detected by the detecting unit while maintaining a frontal direction of the moving body to be substantially constant and transmitting the generated signal to the omnidirectional moving mechanism.

## Description

### [BACKGROUND]

### [TECHNICAL FIELD]

The present disclosure relates generally to a movement control of an autonomous moving body.

### [Description of Related Art]

Recently, there has been proposed and developed a robot capable of providing various services in actual circumstances where a human body exists such as in offices, factories, and the like. Such a robot needs to have many functions, but one of the important functions required for such a robot is the ability to move autonomously to a destination.

The robot is required to move to the destination in a shorter period of time while avoiding collisions with obstacles such as a human body on the way to the destination. Known as an obstacle avoidance control applicable to a robot is a virtual potential method. In this virtual potential method, an attractive potential field with respect to a certain destination point and a repulsive potential field with respect to an obstacle to be avoided are generated and combined together, whereby a route to the destination point without accompanying collisions with the obstacles is generated.

### [SUMMARY]

When such service robot is actually operated, external circumstances such as surrounding obstacles can be detected by using, for example, a suitable detecting unit such as, but not limited to, a laser range finder, a stereo camera, or the like. Therefore, if the posture of the robot body is frequently changed in order to, for example, avoid the obstacles, the direction of the detecting unit is also changed resultantly. As a result, it takes a certain period of time for the robot to analyze the external circumstances, so that the robot may not promptly cope with the change of the external circumstances.

Furthermore, the service robot may transport objects such as loads or the like by hauling them. In such case, however, if the direction of the robot body is changed, the objects to be transported may be shaken greatly, and this may cause the objects to collide with the surroundings.

In accordance with one aspect by way of non-limiting example, there is provided an autonomous moving body having a configuration as follows. That is, the autonomous moving body includes: an omnidirectional moving mechanism; a detecting unit; and a movement control unit. The omnidirectional moving mechanism moves the moving body. The detecting unit can detect an obstacle. The movement control unit generates a movement instruction signal for avoiding the obstacle detected by the detecting unit while maintaining a frontal direction of the moving body to be substantially constant and transmitting the generated signal to the omnidirectional moving mechanism.

With this configuration, even in case that the moving body moves, for example, transversely to avoid the obstacle, the moving body is allowed to move without changing its frontal direction by using the omnidirectional moving mechanism. Accordingly, since there can be omitted a mechanism or various processes which would be necessitated if the frontal direction of the moving body were changed, a prompt and accurate movement control and a simple structure can be achieved.

In the autonomous moving body, the movement control unit may include, for example, a route calculating unit and a posture control unit. The route calculating unit may calculate a moving route along which the moving body is to move. The posture control unit may control a posture of the moving body. The posture control unit makes the frontal direction of the moving body substantially coincident with a direction of the moving route in any of a case where the moving body moves along the moving route and a case where the moving body moves in deviation from the moving route to avoid the obstacle detected by the detecting unit.

With this configuration, even in case that the moving body is deviated from the original moving route and moves, for example, transversely to avoid the obstacle, it is hardly necessary to correct the direction of the moving body after avoiding the obstacle. Therefore, the movement to the destination can be resumed promptly.

In the autonomous moving body, the moving body may transport, for example, an object to be transported, which is disposed at a rear side and/or a front side thereof.

With this configuration, even if the moving body is deviated from the original moving route and moves, for example, transversely to avoid the obstacle, the object to be transported is not much shaken from side to side because the frontal direction of the moving body is not changed. Accordingly, the object to be transported can be prevented from being shaken and colliding with the wall. Furthermore, in comparison with a conventional case where an independent two-wheel drive mechanism is employed, the sharp turn ability of the moving body can be remarkably improved, so that the moving body can move in any direction in any posture. Therefore, the moving body and the object to be transported can be easily prevented from interfering with a nearby moving body (obstacle), so that a smart movement control without obstructing a way of the nearby moving body can be achieved.

In the autonomous moving body, the detecting unit faces toward the frontal direction of the moving body, for example.

With this configuration, for example, the obstacle approaching the moving body from the front side thereof during the forward movement of the moving body can be successfully detected by the detecting unit, and the avoidance operation can be appropriately and securely performed while keeping the detecting unit facing forward.

In another aspect, there is provided a method for controlling a movement of an autonomous moving body. That is, the autonomous moving body, which is controlled by the movement control method, may include, for example, an omnidirectional moving mechanism and a detecting unit. The omnidirectional moving mechanism may move the moving body. The detecting unit can detect an obstacle. Further, the movement control method of the autonomous moving body may include, for example, a first step and a second step. In the first step, the obstacle can be detected by the detecting unit. In the second step, when it is necessary to avoid the detected obstacle, a movement instruction signal for avoiding the detected obstacle while maintaining a frontal direction of the moving body to be substantially constant is generated and the generated signal is transmitted to the omnidirectional moving mechanism.

In accordance with this method, even in case the moving body moves, for example, transversely to avoid the obstacle, the moving body is allowed to move without changing its frontal direction by using the omnidirectional moving mechanism. Accordingly, since there can be omitted a mechanism or various processes which would be necessitated if the direction of the moving body were changed, a prompt and accurate movement control and a simple structure can be achieved.

Other features, elements, processes, steps, characteristics and advantages of the present disclosure will become more apparent from the following detailed description with reference to the attached drawings.

### [BRIEF DESCRIPTION OF THE DRAWINGS]

Fig. 1 is a side view to schematically illustrate an overall configuration of a service robot in accordance with an illustrative embodiment;

Fig. 2 is a bottom view of an omni-wheel mechanism;

Fig. 3 is a block diagram to illustrate an electrical configuration for performing a movement control of the robot;

Fig. 4 is a schematic view to illustrate a relationship between a moving speed, a moving direction and a rotation amount of the robot and a movement amount of each omni-wheel;

Fig. 5 shows relational equations between the moving speed, the moving direction and the rotation amount of the robot and the movement amount of each omni-wheel;

Fig. 6 is a plane view to schematically illustrate how the robot in accordance with an illustrative embodiment avoids an obstacle; and

Fig. 7 shows a plane view to schematically illustrate how a conventional robot having a travel unit of an independent two-wheel mechanism type avoids an obstacle.

### [DETAILED DESCRIPTION]

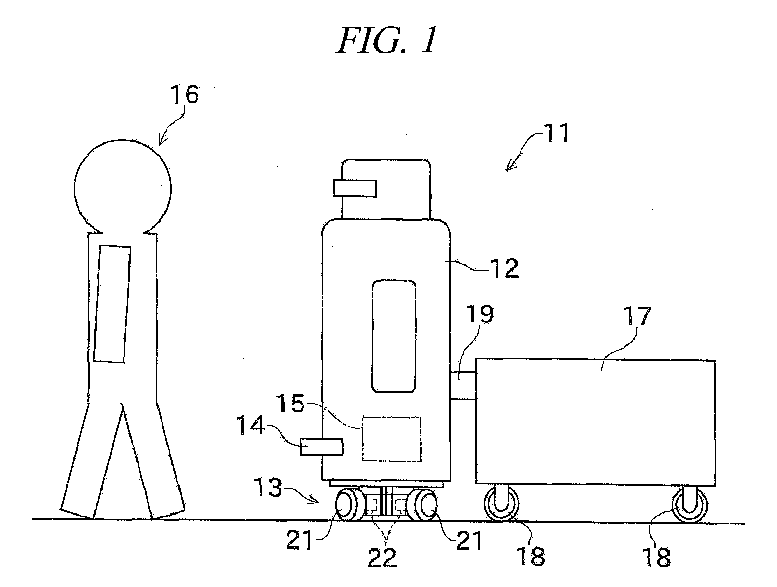

Hereinafter, illustrative embodiments will be described. Fig. 1 presents a side view to schematically illustrate an overall configuration of a service robot 11 in accordance with an illustrative embodiment.

By way of example, but not limitation, the service robot 11, as an autonomous moving body shown in Fig. 1, includes a main body 12, an omni-wheel mechanism (omnidirectional moving mechanism) 13, a laser range finder (detecting unit) 14 and a travel controller (movement controller) 15.

The main body 12 has, for example, a thinly elongated shape in a vertical direction, and the omni-wheel mechanism 13 for allowing the robot to be self-propelled can be installed at a position such as a lower end portion of the main body 12. Examples of the omni-wheel mechanism 13 that can be used herein include, but are not limited to, four omni-wheels 21 arranged at an angular interval of about 90° along the circumferential direction thereof and four motors 22 installed to correspond to the respective omni-wheels 21.

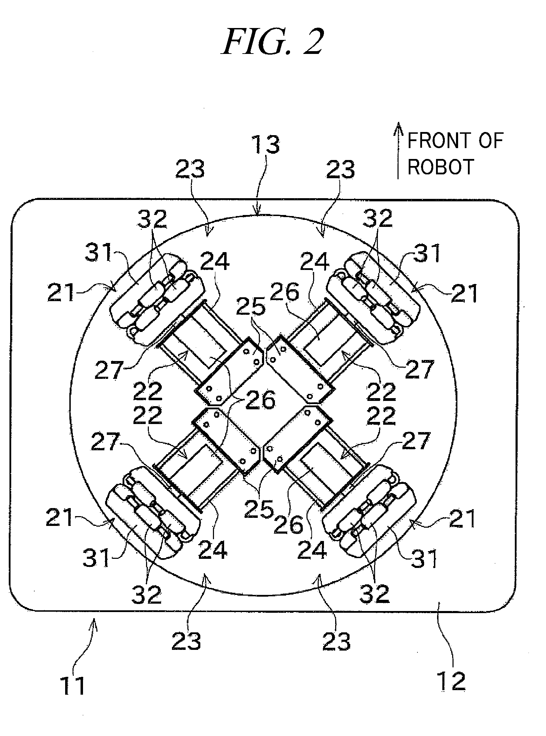

Now, an example configuration of the omni-wheel mechanism 13 will be described in detail with reference to Fig. 2. Fig. 2 is a bottom view of the omni-wheel mechanism 13.

An illustrative example of the omni-wheel mechanism 13 has four wheel driving units 23 arranged at a bottom surface of the main body 12, as shown in Fig. 2. For example, each wheel driving unit 23 may include a motor supporting frame 24 and the motor 22 fixed to the motor supporting frame 24. For example, one end portion of the motor supporting frame 24 can be fixed at the bottom surface of the main body 12 via a bracket 25.

In an illustrative example, the motor 22 can include a housing 26 for rotatably supporting a non-illustrated rotor, and the housing 26 can be disposed inside the motor supporting frame 24. An example of an output shaft 27 of the motor 22 may protrude outwardly from the motor supporting frame 24, and the omni-wheel 21 is installed at, for example, an end portion of the output shaft 27. In some embodiments, the omni-wheel 21 in each wheel driving unit 23 may be arranged such that its rotation shaft lies at an angle of about 45° or 135° with respect to the frontal direction of the robot 11.

In an illustrative example, each omni-wheel 21 may include a roller-shaped main body 31 fixed to the output shaft 27 of the motor 22 and a plurality of free rollers 32 arranged at the outer periphery of the main body 31. The free rollers 32 can be rotatably supported by the main body 31, and the outer peripheral surface of each free roller 32 can be configured to make contact with a ground surface. Further, a rotation axis of the free roller 32 can be approximately perpendicular to a rotation axis of the main body 31.

With this configuration, if the motor 22 is driven and the main body 31 is resultantly rotated, the free rollers 32 are rotated integrally with the main body 31, so that their driving forces are transferred to the ground surface. Meanwhile, as the free rollers 32 in contact with the ground surface are rotated, the omni-wheel 21 can easily move along a direction parallel to the rotation axis of the main body 31. With the above-described configuration, omnidirectional movements of the robot 11 can be achieved.

In some embodiments, the motors 22 of the four wheel driving units 23 may independently control rotational directions and rotational speeds of the four omni-wheels 21 based on a travel instruction (movement instruction) from the travel controller 15, whereby a control for moving the robot 11 in any direction (omnidirectional movement control) can be carried out.

In an illustrative example, the laser range finder 14 shown in Fig. 1 is installed at a frontal portion of the robot 11 so as to face toward the frontal direction (forward direction) of the robot body. The laser range finder 14 is capable of scanning an area in front of the robot 11 in a circular sector-shaped manner when viewed from the top by reflecting laser irradiated from a non-illustrated transmitter with a rotary mirror. Then, by measuring the time taken for the irradiated laser to return after being reflected by an object, the distance to the object can be measured. The laser range finder 14 functions as a means to obtain the vision of the robot 11 and is used to detect surrounding environments such as, but not limited to, geographical features and objects (obstacles) around the robot.

A cart 17, which is an object to be transported (i.e., an object to be hauled), is disposed, for example, behind the main body 12 of the robot 11. In some embodiments, the cart 17 can be provided with casters 18 at its bottom portion and can be connected to a rear portion of the main body 12 via a connecting member 19. Further, the connecting member 19 may fix the cart 17 integrally to the main body 12, and a so-called variable joint-type connecting member or the like need not be used in some embodiments.

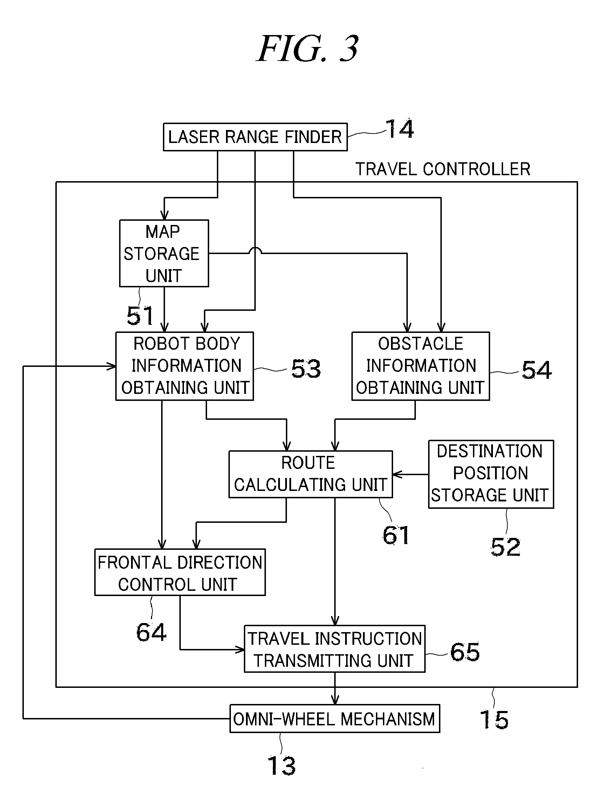

Now, the travel controller 15 will be described in conjunction with Fig. 3. Fig. 3 is a block diagram showing an electrical configuration for the movement control of the robot 11.

In certain embodiments, the travel controller 15 can be implemented in a microcomputer and include, though not illustrated in the drawing, a CPU as an operating unit, a ROM and a RAM as storage units, and so forth. Further, a control program for implementing autonomous movements of the robot 11 can be stored in the ROM, for example.

As shown in Fig. 3, one illustrative example of the travel controller 15 may include, a map storage unit 51, a destination position storage unit 52, a robot body information obtaining unit 53, and an obstacle information obtaining unit 54. Further, the travel controller 15 may also include a route calculating unit 61, a frontal direction control unit (posture control unit) 64, and a travel instruction transmitting unit (movement instruction transmitting unit) 65. Each of these units can be implemented by a combination of the above-stated hardware and software.

The map storage unit 51 may store therein a map showing stationary obstacles (obstacles which do not disappear or do not change their positions) within the moving range of the robot 11. To create this map, the ambient surroundings may be scanned by, e.g., the laser range finder 14 while moving the robot 11 in a state where all moving obstacles such as a human body or the like are removed. The robot 11 may recognize the position and the shape of the stationary obstacle, and then automatically create the map and store the map in a suitable memory.

The destination position storage unit 52 may store therein information on a destination position which the robot 11 is to reach. For example, the destination position is designated by manipulating the robot 11 by an operator and is stored as coordinates on the map.

The robot body information obtaining unit 53 may calculate and obtain the position and the speed of the robot body, and also calculate and obtain which direction the frontal side of the robot body is facing toward (i.e., posture angle). In one embodiment by way of non-limiting example, the robot body information is decided after collectively considering a result of collating the surrounding obstacle information obtained by the laser range finder 14 with the map and rotational angle information of the output shaft 27 of each motor 22 of the omni-wheel mechanism 13. Further, the rotational angle of the output shaft 27 of the motor 22 can be obtained by a non-illustrated encoder installed at the output shaft 27.

The obstacle information obtaining unit 54 may detect a stationary or moving obstacle, which is not shown on the environment map of the robot, by means of the laser range finder 14 during the operation of the robot, and obtains the position and the speed of the detected obstacle.

The route calculating unit 61 may calculate a route to the destination position based on the position of the robot body, which is obtained by the robot body information obtaining unit 53, and the map. Further, in case that an obstacle is detected by the obstacle information obtaining unit 54 and it is determined that the robot needs to avoid the obstacle, the route calculating unit 61 calculates a direction and a speed for moving the robot body in order to avoid the obstacle. Further, such calculation can be performed based on a well-known virtual potential method.

The frontal direction control unit 64 may receive the route information obtained by the route calculating unit 61 and the current robot body posture angle information obtained by the robot body information obtaining unit 53, and then it may calculate a rotation amount of the robot body necessary to make a front surface of the robot 11 face toward the direction of the route.

The travel instruction transmitting unit 65 may generate a travel instruction for moving and rotating the robot body based on the route (or direction and speed for avoiding the obstacle) obtained by the route calculating unit 61 and the rotation amount obtained by the frontal direction control unit 64. Then, by transmitting the travel instruction to the omni-wheel mechanism 13, the robot 11 is allowed to travel.

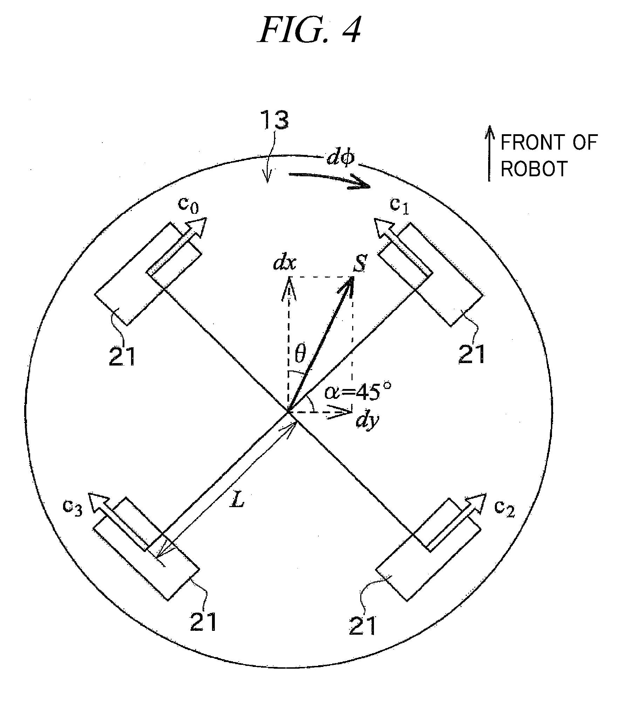

Now, the movement control and the posture angle control of the robot 11 will be described in detail with reference to Fig. 4. Fig. 4 is a schematic bottom view of the omni-wheel mechanism 13.

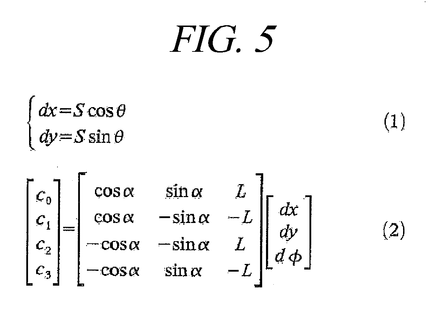

As illustrated in Fig. 4, a distance from the center position of the four omni-wheels 21 to each omni-wheel 21 is defined as L, and an inclination angle of the omni-wheel 21 is defined as α. Further, in one embodiment by way of non-limiting example, α = 45°, as mentioned above. With this configuration, when the robot moves by a distance S in a θ direction and rotates by an angle dφ, respective elements dx and dy of a moving distance of the robot and a moving amount cᵢ of each omni-wheel 21 can be expressed by equations (1) and (2) of Fig. 5. Here, i is a number for identifying each of the omni-wheels 21, and it is an integer ranging from 0 to 3.

In an illustrative embodiment, the robot 11 can be moved in a designated direction θ and rotated at a designated angle dφ by transmitting a driving signal to the motors 22 so as to obtain the moving amount cᵢ of each omni-wheel 21 as shown in the equation (2) of Fig. 5. In this manner, the robot in accordance with an illustrative embodiment can perform the translational motion (parallel movement) and the rotational motion independently and thus is capable of achieving a movement which could not be achieved by a robot employing, for example, an independent two-wheel drive mechanism.

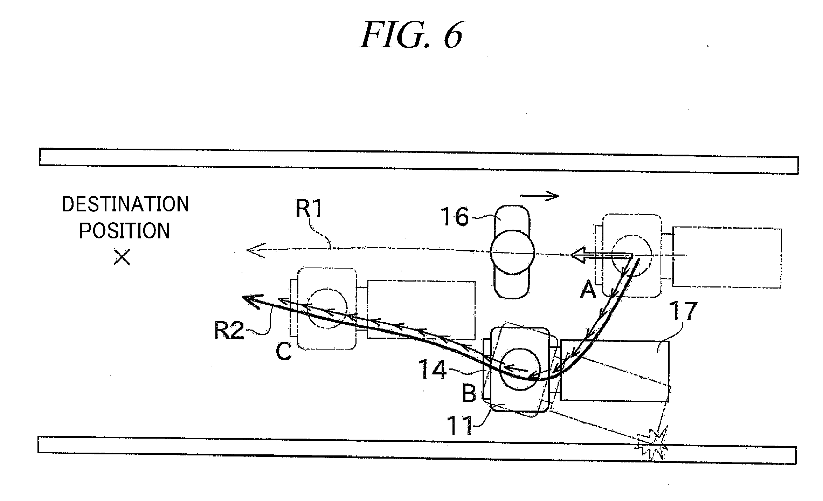

Now, an obstacle avoidance control will be described in detail with reference to Fig. 6. Fig. 6 sets forth a schematic plane view illustrating how the robot 11 reaches a preset destination position while avoiding an obstacle (human body) 16 in case that the robot 11 having the cart 17 connected to the rear portion thereof is placed at a certain position in a long and narrow passage and the preset destination position is assigned to the robot 11.

In Fig. 6, the robot 11 having the destination position assigned thereto calculates a route R1 to the destination position and moves along the route R1. At this time, the frontal direction of the robot 11 is controlled to coincide with the direction of the route R1.

Assume that the robot 11 detects the obstacle 16 at a position A in Fig. 6. In such case, in the travel controller 15, a process of calculating a direction and a speed in and at which the robot body is to be moved to avoid the obstacle 16, and a process of actually moving the robot body based on the calculation result are repeatedly performed until it is determined that there is no more possibility of collision. As a result, the robot 11 moves to a position C via a position B while drawing a trajectory (avoidance trajectory) R2 deviated from the originally set route R1. During this avoidance operation, the frontal direction of the robot 11 is controlled to substantially maintain the direction of the original route R1 (route vector, marked by a blanked arrow in Fig. 6).

By this control, the robot 11 in accordance with an illustrative embodiment can avoid the obstacle 16 while hardly changing the frontal direction of the robot body, as illustrated in Fig. 6. Accordingly, the direction of the laser range finder 14 is not frequently changed, so that a process load of recognizing the obstacle 16 can be reduced, whereby the robot 11 is allowed to cope with a change of the surrounding environment promptly. That is, since there can be omitted a detector direction control mechanism for maintaining the direction (absolute angle) of the laser range finder 14 to be substantially constant even if the posture of the robot body is changed, the structure of the robot can be simplified. Furthermore, when the robot 11 hauls the cart 17 connected to the rear portion thereof, the cart 17 can be transported without being shaken from side to side even if the connecting member is fixed thereto. Therefore, it is possible to prevent a collision of the cart 17 with the wall of the passage at the position B of Fig. 6, as illustrated by a dashed line, for example.

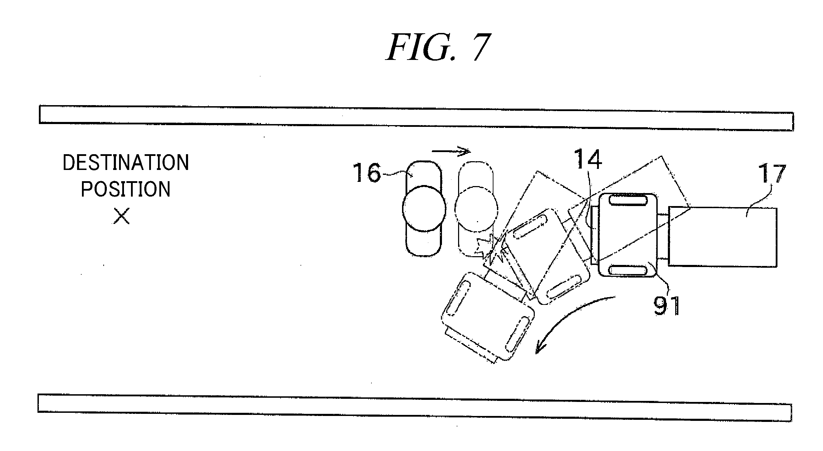

Furthermore, in case of a conventional robot 91 having a travel unit of an independent two-wheel mechanism type as shown in Fig. 7, since a front surface of a robot body needs to face toward a moving direction, the robot 91 is required to move a certain distance in order to avoid an obstacle 16 after changing its direction. Thus, if the obstacle 16 suddenly appears from a blind spot of the laser range finder 14, it is very difficult for the robot 91 to change its direction instantly to avoid the collision, so that it is not easy to carry out an avoidance control for preventing the robot body or the shaken cart 17 from colliding with the obstacle (human body) 16 which is approaching the robot body. In some embodiments, however, since the robot 11 has the omni-wheel mechanism 13 as an omnidirectional moving mechanism, its sharp turn ability is highly excellent so that the robot 11 can move in any direction at any posture. Accordingly, as shown in Fig. 6, when the obstacle 16 is detected, it is possible to carry out a control for greatly changing only a moving direction of the robot 11 without changing the frontal direction of the robot 11, while preventing the cart 17 from being shaken. Thus, even in a narrow space within the passage, the human body or the like can pass by the robot 11 with ease.

As stated above, in some embodiments, the robot 11 includes the omni-wheel mechanism 13, the laser range finder 14 and the travel controller 15. The omni-wheel mechanism 13 allows the robot body to move. The laser range finder 14 is configured to detect the obstacle 16. The travel controller 15 generates a movement instruction signal for avoiding the obstacle 16 detected by the laser range finder 14 without changing the frontal direction of the robot body and transmits the signal to the omni-wheel mechanism 13.

Furthermore, in some embodiments, the robot 11 performs a movement control by a method including, but not limited to, the following steps. In a first step, the obstacle 16 is detected by the laser range finder 14. In a second step, if it is necessary to avoid the detected obstacle 16, a movement instruction signal for avoiding the obstacle 16 without changing the frontal direction of the robot body is generated and it is transmitted to the omni-wheel mechanism 13.

With this control, even in case the robot body moves, for example, transversely to avoid the obstacle, the robot body is allowed to move without changing its frontal direction by using the omni-wheel mechanism 13. Accordingly, since there can be omitted a mechanism (e.g., the above-mentioned detector direction control mechanism) or various processes (e.g., a re-recognition process required as a result of a great variation in the angle of the laser range finder 14) which would be necessitated if the direction of the robot body were changed, a prompt and accurate movement control and a simplification of robot structure can be achieved.

Furthermore, in the robot 11 of an illustrative embodiment, the travel controller 15 includes the route calculating unit 61 and the frontal direction control unit 64. The route calculating unit 61 calculates the moving route R1 along which the robot body should move. The frontal direction control unit 64 controls the posture of the robot body. The frontal direction control unit 64 controls the frontal direction of the robot body such that it substantially coincides with the direction of the moving route R1 in any of a case where the robot body moves along the moving route R1 and a case where the robot body moves in deviation from the moving route R1 to avoid the obstacle 16 detected by the laser range finder 14.

Accordingly, even in case that the robot body is deviated from the original moving route R1 and moves, for example, transversely to avoid the obstacle 16, it is hardly necessary to correct the direction of the robot body after avoiding the obstacle. Therefore, the movement to the destination can be resumed promptly.

Further, in some embodiments, the robot 11 is configured to haul and transport the cart 17 disposed at the rear side of the robot body.

Accordingly, even in case that the robot body is deviated from the original moving route R1 and moves, for example, transversely to avoid the obstacle 16, the cart 17 is not much shaken from side to side because the frontal direction of the robot body is not changed. Accordingly, the cart 17 can be prevented from being shaken and colliding with the wall, as illustrated by the dashed line B of Fig. 6. Further, it is possible to achieve a smart movement control without obstructing a way of a moving body such as a human body.

Furthermore, in the robot 11 of an illustrative embodiment, the laser range finder 14 is disposed to face toward the frontal direction of the robot body.

With this configuration, the obstacle 16 approaching the robot body from the front side of the robot body during the forward movement of the robot body can be successfully detected by the laser range finder 14, and the avoidance operation can be appropriately and securely performed while keeping the laser range finder 14 facing forward.

Though the illustrative embodiments have been described so far, the above-described configuration can be modified as follows, for example.

The direction of the laser range finder 14 is not limited to the frontal direction of the robot 11. For example, it may be possible to set up a configuration in which a pair of laser range finders are provided on left and right sides of the robot so as to face toward the left and right outer sides thereof. Furthermore, in case that the autonomous moving body such as the robot has an appearance of which the frontal direction is difficult to define, the direction in which the robot moves in response to a straightforward movement instruction may be defined as the frontal direction.

Moreover, in lieu of or in addition to the laser range finder 14, the robot 11 may be provided with a stereo camera, a monocular camera, an ultrasonic sensor, an infrared sensor or the like, to detect the obstacle 16 with such device.

The configuration of the omni-wheel mechanism 13 for moving the robot 11 can be modified such that six or three omni-wheels are arranged thereat instead of four omni-wheels 21.

Furthermore, the cart 17 can be disposed at the front side of the robot 11 instead of the rear side thereof. In such case, by controlling the frontal direction of the robot body not to be changed when the robot body avoids the obstacle, it is also possible to prevent the collision of the cart with its surrounding environment which may be caused by the shaking of the cart. In addition, other types of objects to be transported can be employed instead of the cart 17, or the cart 17 can be omitted.

The control described in the above embodiment is not limited to the service robot 11, but it can be applied to the autonomous movement control of, for example, a self-propelled transportation carriage equipped with an omnidirectional moving mechanism such as, but not limited to, an omni-wheel mechanism.

While various aspects and embodiments have been described herein, it will be apparent to those skilled in the art that the disclosed embodiments may be modified in numerous ways and may assume many embodiments other than those specifically set out and described above. Accordingly, it is intended by the appended claims to cover all modifications of the invention that fall within the scope of the present invention.

## Claims

1. An autonomous moving body (11) comprising an omnidirectional moving mechanism (13) for moving the moving body and a detecting unit (14) for detecting an obstacle, the autonomous moving body (11) **characterized by** further comprising:
a movement control unit (15) for generating a movement instruction signal for avoiding the obstacle detected by the detecting unit (14) without changing a frontal direction of the moving body and transmitting the generated signal to the omnidirectional moving mechanism (13).

2. The autonomous moving body (11) according to claim 1, **characterized in that** the movement control unit (15) includes:
a route calculating unit (61) for calculating a moving route along which the moving body is to move; and
a posture control unit (64) for controlling a posture of the moving body,
wherein the posture control unit (64) makes the frontal direction of the moving body coincident with a direction of the moving route in any of a case where the moving body moves along the moving route and a case where the moving body moves in deviation from the moving route to avoid the obstacle detected by the detecting unit (14).

3. The autonomous moving body (11) according to claim 2, **characterized in that** the moving body is allowed to transport an object (17) to be transported, which is disposed at a rear side thereof.

4. The autonomous moving body (11) according to claim 3, **characterized in that** the object (17) to be transported is fixedly connected to the moving body.

5. The autonomous moving body (11) according to claim 2, **characterized in that** the moving body is allowed to transport an object (17) to be transported, which is disposed at a front side thereof.

6. The autonomous moving body (11) according to claim 2, **characterized in that** the omnidirectional moving mechanism (13) is an omni-wheel and includes:
three or more motors (22);
a roller-shaped main body (31) fixed to an output shaft of each motor (22); and
a plurality of free rollers (32) arranged on an outer periphery of the main body (31),
wherein each free roller (32) is rotatably supported by the main body (31) and its outer peripheral surface is allowed to be in contact with a ground surface.

7. The autonomous moving body (11) according to claim 2, **characterized in that** the detecting unit (14) is a laser range finder which reflects irradiated laser with a rotary mirror so that the laser scans a front side of the moving body in a circular sector-shaped manner when viewed from the top.

8. The autonomous moving body (11) according to claim 2, **characterized by** further comprising:
a map storage unit (51) for storing therein a map showing a stationary obstacle within a moving range of the autonomous moving body (11); and
a moving body information obtaining unit (53) for obtaining at least a position of the moving body,
wherein the route calculating unit (61) calculates the moving route based on the position of the moving body obtained by the moving body information obtaining unit (53) and the map stored in the map storage unit (51).

9. The autonomous moving body (11) according to claim 8, **characterized by** further comprising:
a destination position storage unit (52) for storing information on a destination position which the moving body is to reach on the map,
wherein the route calculating unit (61) calculates a route heading to a designated destination position.

10. The autonomous moving body (11) according to claim 2, **characterized in that** the detecting unit (14) is installed so as to face toward the frontal direction of the moving body.

11. The autonomous moving body (11) according to claim 2, **characterized in that** the frontal direction is defined as a direction in which the autonomous moving body (11) moves straight.

12. The autonomous moving body (11) according to claim 2, **characterized in that** the autonomous moving body (11) is a service robot which provides a service in an actual environment where a human body exists.

13. The autonomous moving body (11) according to claim 2, **characterized in that** the autonomous moving body (11) is a self-propelled transportation carriage which transports products in a factory.

14. A method for controlling a movement of an autonomous moving body (11) including an omnidirectional moving mechanism (13) for moving the moving body and a detecting unit (14) for detecting an obstacle, the method **characterized by** comprising:
a first step of detecting the obstacle by the detecting unit (14); and
a second step of generating a movement instruction signal for avoiding the detected obstacle without changing a frontal direction of the moving body and transmitting the generated signal to the omnidirectional moving mechanism (13), when avoiding the detected obstacle.
